# EUROPEAN PATENT APPLICATION

(11) **EP 1 806 900 A1**
(43) Date of publication of application: **11.07.2007**
(21) Application number: 06290043.6
(22) Date of filing: 05.01.2006
(51) Int. Cl.: H04L 29/06

(54) **Method for allocating network resources and mediating network element**

(71) Applicant: Alcatel Lucent, 75008 Paris (FR)
(72) Inventor: Oberle, Karsten, 68199 Mannheim (DE); Wahl, Stefan, 71701 Schwieberdingen (DE); Laible, Volker, 70469 Stuttgart (DE); Riemer, Joachim, 70499 Stuttgart (DE)
(74) Representative: Kohler Schmid Möbus

(57) **Abstract**

A method of allocating network resources for data service sessions, in particular SIP- based real-time conversational services in NGN / IMS / TISPAN systems, wherein session setup between at least two entities (7,10; UAC,UAS) involves choosing one of a plurality of codecs available at both entities. According to the proposed method the following steps are performed during session initiation:
- establishing a matching list of codecs available at both entities,
- reducing said list to only one item,
- setting up the service session using the codec indicated by said item, and
- allocating the network resources for said service session in accordance with a resource requirement by the used codec,
wherein the steps of list establishing and reducing are performed by a service controller (5) of the session initiating entity (7; UAC).
In this way, the proposed method efficiently obviates wasting of network resources.

## Description

### Background of the invention

The invention relates to a method of allocating network resources for data service sessions, in particular SIP-based real-time conversational services in NGN / IMS /TISPAN systems.

Furthermore, the present invention relates to a mediating network element for use in a communication system, in particular adapted to support data services of the above-mentioned type.

In addition, the present invention relates to a communication network for operatively connecting two entities in a data service session, in particular an NGN / IMS / TISPAN system for offering SIP-based real-time conversational services, as well as to a computer program product for translating into practice various aspects of the present invention.

Generally, the present invention is concerned with resource allocation for Quality of Service (QoS) management support of SIP (Session Initiation Protocol)-based conversational real-time services, e.g. Voice over IP (VoIP) or Multimedia over IP (MMoIP) in NGN (Next Generation Network) / IMS (IP Multimedia Subsystem) /TISPAN (Telecoms & Internet converged Services & Protocols for Advanced Networks) systems, which use SIP or any other suitable session initiation protocol for the setup and control of a service session involving data transfer between two entities connected for data transfer purposes. In the context of the present invention, said data service session / data transfer will generally be referred to as a "service session".

In particular for the implementation of resource allocation and reservation for end-to-end QoS management, it is necessary that the service controllers involved, e.g. CSCF (Call Session Control Function) in the case of IMS, have detailed knowledge about the resources needed for a particular service. For instance, in SIP-based services, the service controller has to derive the corresponding information from a SIP signalling flow (service request) on the control plane of the communication network. Subsequently, the service controller uses said information to request the required resources from the network. However, the respective information provided by SIP are not unequivocal: For a given service session, the data to be transmitted between the communicating entities are coded / decoded by means of a suitable coding / decoding module (generally referred to as a "codec"). Typically, the entities in question (also referred to as "clients") each support a plurality of different codecs, a number of which can be suitable for a given service / application. On a user layer or transport layer of the network, choosing a specific type of codec for data transfer determines the required bandwidth for providing a given service with a predefined QoS. However, if both clients commonly support a plurality of different codecs, then - if choosing the codec is left to the client, as is the case with prior art approaches - the service controller does not know which codec will be finally chosen by the client after codec exchange of involved clients. Thus, the service controller does not know the exact bandwidth required for a requested service.

A known prior art approach to solve this problem consists in choosing, by means of the service controller, the codec with the highest bandwidth requirement. In this case, the requested service is enabled with appropriate QoS. However, such a choice effectively results in wasting valuable network resources, especially in an access network, if the actually used bandwidth for a given service is lower than the reserved bandwidth, as will generally be the case. A possible or alternative approach would consist in using the bandwidth field in a header of the SIP / SDP (Session Description Protocol). However, since the clients have to choose a codec out of a so-called interaction list (list containing commonly supported codecs) after exchange of the SIP signalling messages for session establishment (INVITE / 2000K / ACK messages), indicating a codec by means of said header would effectively come "too late" for to include such information in said SIP / SDP header to inform the service controller.

### Object of the invention

It is the object of the present invention to provide a method which enables service controllers involved in establishing data service sessions to request only the actually required and used resources from the network for a given session while obviating the above-mentioned disadvantages of wasting valuable network resources, especially in access networks. It is also an object of the present invention to provide a mediating network element, a communication network, and a computer program product suitable for translating such a method into practise.

### Summary of the invention

The object is achieved by providing a method of the above-mentioned type, wherein during session initiation the following steps are performed:
- establishing a matching list of codecs available at both entities,
- reducing said list to only one item,
- setting up the service session using the codec indicated by said item, and
- allocating the network resources for said service session in accordance with a resource requirement by the used codec,
wherein the steps of list establishing and reducing are performed by a service controller of the session initiating entity.

According to a second aspect of the present invention, the object is also achieved by providing a mediating network element of the above-mentioned type, which comprises:
- means for establishing a matching list of codecs available at at least two entities for setting up a data service session between said two entities,
- means for reducing said list to only one item,
- means for setting up the service session using the codec indicated by said item, and
- means for requesting required network resources for said service session in accordance with a resource requirement by the used codec from at least one resource scheduler.

According to a third aspect of the present invention, the object is also achieved by providing a communication network of the above-mentioned type, wherein at least one mediating network element according to said second aspect of the present invention is located in a communication path between said two entities.

According to a fourth aspect of the present invention, the object is also achieved by providing a computer program product of the above-mentioned type, which comprises program code sequences operable to, during session initiation:
- establish a matching list of codecs available at both entities,
- reduce said list to only one item,
- set up the service session using the codec indicated by said item, and
- allocate the network resources for said service session in accordance with a resource requirement by the used codec.

Finally, the object is further achieved by providing a computer program product, which comprises program code sequences operable to provide a mediating network element according to said second aspect of the present invention.

Thus, according to a general feature of the present invention, establishing only the actually required and used resources from the network is achieved by a service controller reducing the list of possible codecs established during a session negotiation / initiation phase to only one codec. Without the proposed list reduction, a session initiating User Agent would simply choose one codec out of the matching list and directly use said codec for the upcoming data service session, e.g. an RTP session (real-time transport protocol), without involvement of the service controller. Hence, no correct resource reservation would be initiated.

According to the present invention, the selected codec can be used in a totally deterministic way to request the exact required resources in the respective parts of the communication network in order to achieve a specific end-to-end QoS. Moreover, subsequently all other service controllers involved in session establishing will be informed in an unequivocal way about which codec is to be used for providing the requested service. In the context of the present invention, the choice of the particular codec results in a required communication bandwidth, which is to be requested and reserved in the network.

List reduction, i.e. choosing the specific codec from said matching list of codecs, could be performed in an arbitrary way, i.e. a service controller in question simply picks one of the listed codecs from the matching list. However, in a preferred embodiment of the method in accordance with the present invention list reducing is performed in accordance with stored user preferences accessible by the service controller. Said user preferences may include requiring always the best available data rate, lowest cost, or the like.

In a corresponding further embodiment of the communication network in accordance with the present invention, said network further comprises storage means adapted to store user preferences accessible by the means for reducing said codec list of the mediating network element, wherein said means for reducing are adapted to reduce said codec list in accordance with said user preferences.

In one further embodiment of the communication network in accordance with the present invention, the connected entities are devised as end-users of the service session, e.g. a SIP UAC (User Agent Client) and a SIP UAS (User Agent Server). However, in an alternative embodiment of the communication network in accordance with the present invention said entities can also be devised as transcoding elements located in a communication path of the service session, e.g. in the form of session boarder controllers (SBCs). In this way, the proposed solution in accordance with the present invention can be used to effectively implement a "hop-by-hop" networking principle, e.g. in connection with codec standardisation in IMS (core) networks.

Further advantages and characteristics of the present invention can be gathered from the following description of preferred embodiments given by way of example only with reference to the enclosed drawings. The features mentioned above as well as below can be used in accordance with the present invention either individually or in conjunction. The embodiments mentioned are not to be understood as an exhaustive enumeration but rather as examples with regard to the underlying concept of the present invention.

### Drawings

- Fig. 1: is a schematic diagram of a communication network in accordance with the present invention;
- Fig. 2: is an illustrative diagram of the method in accordance with the present invention; and
- Fig. 3: is a schematic diagram illustrative of how the method in accordance with the present invention is translated into practice by means of a communication network in accordance with the present invention.

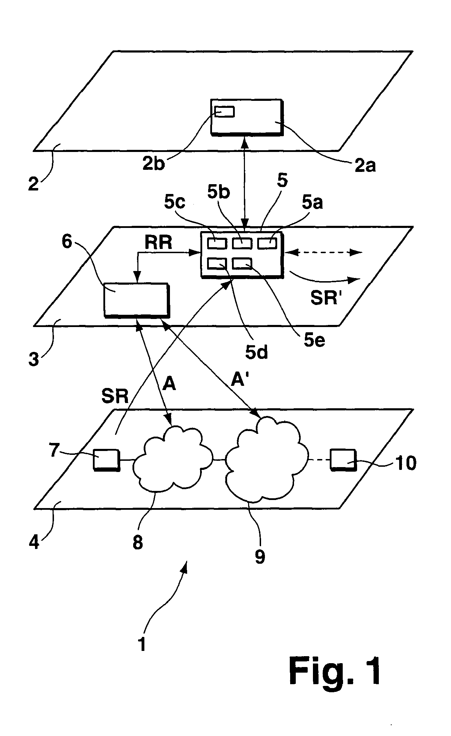

**Fig. 1** shows a schematic block diagram of a partial IP Multimedia Subsystem/TISPAN architecture as used in an embodiment of the communication network in accordance with the present invention. The communication network **1** (IMS/TISPAN) comprises an application layer **2,** a control / signalling layer **3** which may also be a part of the application layer **2,** and a user / transport layer **4.** The application layer 2 comprises storage means **2a** with a stored user preference file 2b, the function of which will become apparent later. On the control / signalling layer 3, the communication network 1 comprises a service controller **5** (CSCF - Call Session Control Function) and a resource scheduler 6 (RACS - Resource and Admission Control Subsystem). The service controller 5 further comprises list establishing means **5a,** list reducing means **5b,** service setup means **5c,** and resource requesting means **5d,** preferably devised as software means, as well as storage means **5e.** The function of said means will be explained in detail further below. On the user / transport layer **4,** the communication network 1 comprises a user terminal **7** operatively attached to an access network **8,** the latter being further connected with a core network **9.**

As indicated by means of dashed lines / arrows in Fig. 1, in an extended communication network 1 the service controller 5 is generally connected with a number of additional service controllers (not shown in Fig. 1), and the core network 9 is usually connected with other core / access networks (not shown in Fig. 1).

At an end point of network connectivity on the user / transport layer 4, a further user terminal **10** is depicted in Fig. 1. For a given service request issued by the user terminal 7, in order to establish a service session with the other user terminal 10 depicted in Fig. 1, user terminal 7 acting as a User Agent client (UAC) sends a service request based on a suitable session initiation protocol, e.g. SIP / SDP, to the service controller 5, as indicated in Fig. 1 by means of an arrow **SR.** Said service request SR may be passed on to other service controllers in the network (arrow SR'). The type of codec which is used in RTP (transport) is indicated in SIP respectively SDP signaling. The codec type chosen by the service controller 5 determines a required bandwidth on the transport layer 7, such that the service controller 5 may issue a corresponding resource request **RR** to the resource scheduler 6. As shown by means of arrows **A, A'** in Fig. 1, the resource scheduler 6 may then reserve the requested /required resources on access network 8 and / or core network 9.

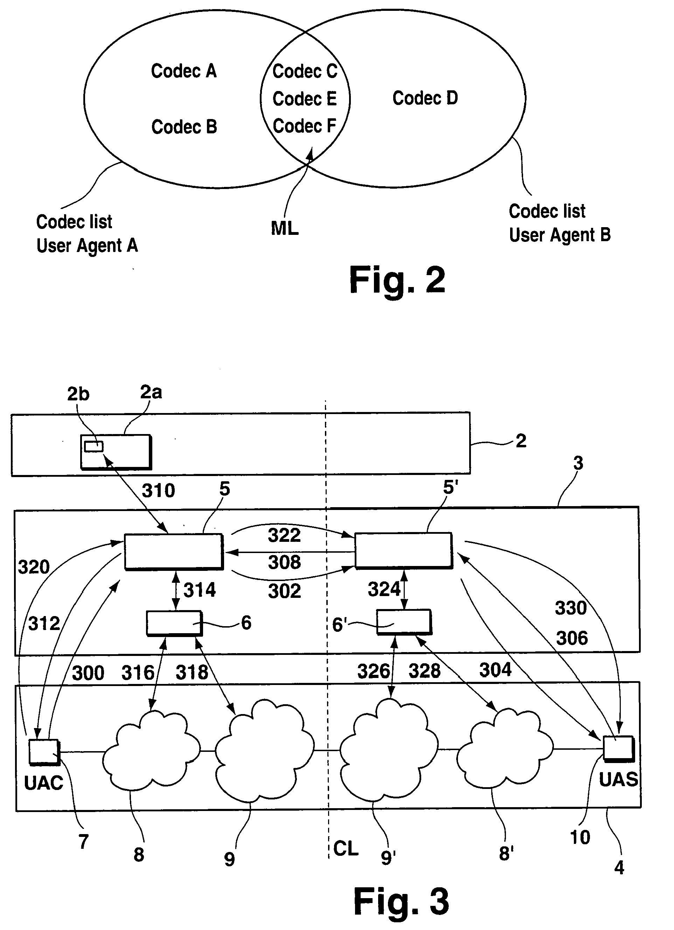

Generally, for a given application associated with the service request SR, user terminals 7, 10 may support a plurality of different codecs, wherein a number of codecs are commonly supported by both user terminals. This situation is depicted in Fig. 2.

**Fig. 2** shows respective lists of codecs supported by two different User Agents (User Agent A, User Agent B) which are physically located on user terminal 7 and user terminal 10, respectively, of Fig. 1. Codec A to codec F denote respective codecs supported by at least one of the User Agents. According to the illustration of Fig. 2, User Agent A supports codecs A, B, C, E and F, whereas User Agent B supports codecs C-F. In other words: codecs C, E and F are commonly supported by both User Agents, and are said to costitute a "matching list" **ML** of codecs, as indicated in Fig. 2.

If choosing a suitable codec for a given service session was left to one of the User Agents of Fig. 2 - as is the case in prior art solutions - then any one of codecs C, E, F could be chosen in the example of Fig. 2. In this case, the service controller 5 (Fig. 1) would not know which resources should be reserved on access network 8 / core network 9 (Fig. 1) for a particular service request, thus entailing sub-optimal use of network resources.

In accordance with the present invention, using the list establishing means 5a of service controller 5 (Fig. 1), said matching list ML of commonly supported codecs is established, as symbolised by the intersection of the two lists comprising codecs C, E, F in Fig. 2. Then, using the list reducing means 5b of service controller 5, said list ML is reduced to only one codec, such that the required bandwidth to be reserved /allocated on access network 8 / core network 9 is precisely known to the service controller 5 prior to session establishing. For to reduce the codec list ML to only one codec, service controller 5 uses for instance the user preference information stored in file 2b on the storage means 2a on the application / service layer 2. For instance, suitable user preferences may include requesting always the best available data rate, lowest cost, etc. Then, by using the session setup means 5c of service controller 5 the requested service session is established between user terminal 7 and user terminal 10. In this context, the resource requesting means 5d of service controller 5 are used to request the required network resources in connection with the chosen codec from the resource scheduler 6 (Fig. 1), which will eventually reserve the required resources on the access network 8 and / or the core network 9, as stated before.

In this way, with the proposed reduction of the codec list ML (Fig. 2) the communication controller(s) 5 comprised in the communication network 1, e.g. (P)-CSCF in IMS / TISPAN, can request the actually required network resources from the resource scheduler 6 (e.g., SPDF / RACS in TISPAN) without wasting network resources by relying on overly conservative assumptions.

**Fig. 3** shows a schematic diagram of an embodiment of the communication network in accordance with the present invention, further providing a detailed illustration of an embodiment of the method in accordance with the present invention.

In Fig. 3, on the user / transport layer 4 of the depicted communication network 1 there is comprised a further core network **9',** connected with a further access network **8'** to which a user terminal 10 (cf. Fig. 1) is operatively attached. In the embodiment of Fig. 3, SIP / SDP messages are used for setting up a service session between user terminal 7 functioning as a SIP User Agent Client (UAC) and user terminal 10 functioning as an SIP User Agent Server (UAS). In addition, on the control / signalling layer 3 of the communication network 1 of Fig. 3 there is comprised a further service controller 5' and a further resource scheduler 6' provided for allocating the required network resources on the core network 9' and / or on the access network 8'.

An embodiment of the method in accordance with the present invention will now be explained with reference to the numbered message arrows 300, 302, 304, ... in Fig. 3, which may be used to denote both the act of sending respective messages between the entities involved and the sent messages themselves:

In a simplified end-to-end connection between the two user terminals 7, 10 with an involvement of two service controllers 5, 5' in the signalling flow, UAC first sends a service request **300** (SIP INVITE) to service controller 5, which includes the SDP descriptor of UAC with the list of codecs supported by the UAC for the particular session to be established. The service controller 5 removes the SDP from the INVITE message, stores it locally in storage means 5e (Fig. 1) and forwards the modified message **302** to service controller 5'. The service controller 5' forwards said message **304** to the UAS. The UAS responds with a 2000K response message to the service controller 5' at **306,** wherein said response message includes the SDP descriptor of the UAS with a list of codecs supported by the UAS for the particular session to be established. Service controller 5' then forwards the message **308** to service controller 5. The service controller 5 compares the codec list received from the UAS in the 2000K message **308** with the stored list previously received from the UAC at 300. If an intersection of both lists (cf. the matching list ML of Fig. 2) comprises more than one possible codec, service controller 5 - representing the controller of the user initiating the session - selects one codec from the matching list ML, thus effectively reducing said list to only one item. Said selection may be performed in an arbitrary fashion. However, in accordance with a preferred embodiment of the present invention, said selection is based on user preferences stored in the user preferences file 2b, which is accessed by service controller 5 at **310.** Furthermore, the service controller 5 removes codecs from the SDP descriptor of the 2000K message received at 308 and includes the selected codec. Then, the modified 2000K message is sent to the UAC at **312.** From this time on, the service controller 5 has the possibility to request the required resources for that session from the resource scheduler 6 in question, as depicted at **314** in Fig. 3. Consequently, the resource scheduler 6 reserves the required resources in the respective part of the communication network 1 at **316** and **318,** i.e. in the access network 8 and the core network 9, respectively. At **320,** the UAC sends a SIP ACK acknowledgement message to the service controller 5. The service controller 5 therein includes the stored SDP from the UAC, which had been removed from the message at 300 - with the selected codec included in place of the codecs originally transmitted by the UAC at 300. Said message is sent as a SIP ACK message to the service controller 5' at **322.** From that time on, the service controller 5' has the possibility to request the required resources for that session from the resource scheduler 6' at **324.** Consequently, the resource scheduler 6' reserves the required resources in the respective parts of the network, i.e. access network 8' and core network 9', at **326** and **328,** respectively. The service controller 5' then forwards the message received at 322 to the UAS at **330** in order to complete the session setup:

In the above description, the solution proposed by the present invention has been explained for an end-to-end scenario, i.e. for a situation in which a service session is to be established between two end-user terminals 7, 10 of a communication path. However, the approach is also applicable if an end-to-end session is cut into several independent segments (hereinafter referred to as a "hop-by-hop principle"), wherein the method in accordance with the present invention is applied individually for each of the segments. For instance, means for media transcoding are often located on the respective boundaries of available access networks. Such media transcoding means can be provided by Session Boarder Controllers (SBCs) located between an access network and a core network and can be applied for transcoding from one codec to another. As the afore mentioned SBCs will incorporate an increasing number of service controller functionalities in the future, an upcoming standardisation, e.g. for IMS /TISPAN systems, will be likely to recommend one standard codec which must be supported by all of the devices attached to the communication network and / or used in the core network. Keeping in mind the hop-by-hop principle described above, this will result in an effective segmentation of the end-to-end scenario as described above with reference to Fig. 3. Under the above-described conditions, the communication network of Fig. 3 would effectively be cut into two segments along a virtual cutting line CL (dashed vertical line in Fig. 3), i.e., a first segment ranging from the UAC to the core network (core network 9) and a second segment ranging from a core network (core network 9') to the UAS. For both of these segments, the inventive method as described above with reference to Fig. 3 can be applied independently.

Furthermore, the inventive approach can also be extended to multicast connections, wherein a plurality of user terminals are simultaneously sending / receiving the same data, as known to a person skilled in the art.

As known to a person skilled in the art, the above-described service controlling and resource allocating functionalities are preferably devised in software form and are readily implemented by means of suitable program code sequences provided with a corresponding computer program product. Physically, said computer programme product can be provided via any kind of computer readable data carrier medium, e.g. on an optical disc such as a CD or DVD or over a suitable network connection.

In this way, the present invention proposes a basic SIP-compliant method aimed at optimising resource management for end-to-end / hop-by-hop connections, in particular with respect to a required quality of service (QoS). The selection of a codec to be used for the service session is done by the network itself, i.e. by the service controller associated with the user initiating the session, and not by the UAC, from an intersection of codec lists provided by the User Agents, which results in an improved usage of network resources.

## Claims

1. A method of allocating network resources for data service sessions, in particular SIP-based real-time conversational services in NGN / IMS / TISPAN systems,
wherein session setup between at least two entities (7, 10; UAC, UAS) involves choosing one of a plurality of codecs (A-F) available at both entities, **characterised by** the steps of, during session initiation:
- establishing a matching list (ML) of codecs available at both entities,
- reducing said list to only one item;
- setting up the service session using the codec indicated by said item, and
- allocating the network resources for said service session in accordance with a resource requirement by the used codec,
wherein the steps of list establishing and reducing are performed by a service controller (5) of the session initiating entity (7; UAC).

2. The method of claim 1, **characterised in that** the step of list reducing is performed in accordance with stored user preferences (2b) accessible by the service controller (5).

3. A mediating network element (5) for use in a communication network (1), in particular adapted to support real-time data services, in particular SIP-based conversational services in NGN / IMS / TISPAN systems, **characterised by**:
- means (5a) for establishing a matching list (ML) of codecs available at at least two different entities (7, 10; UAC, UAS) for setting up a data service session between the two entities,
- means (5b) for reducing said list to only one item,
- means (5c) for setting up the service session using the codec indicated by said item, and
- means (5d) for requesting required network resources for said service session in accordance with a resource requirement by the used codec from at least one resource scheduler (6).

4. A communication network (1) for operatively connecting two entities (7, 10; UAC, UAS) in a data service session, in particular an NGN / IMS / TISPAN system offering SIP-based real-time conversational services, **characterised in that** at least one mediating network element (5) according to claim 4 is located in a communication path between said two entities.

5. The communication network of claim 4, further comprising storage means (2a) adapted to store user preferences (2b) accessible by the means (5b) for reducing said codec list (ML) of the mediating network element (5), wherein said list reducing means (5b) are adapted to reduce said codec list in accordance with said user preferences (2b).

6. The communication network of claim 4, **characterised in that** the entities to be connected are end-users (7, 10) of the service session.

7. The communication network of claim 4, **characterised in that** the entities are transcoding elements of the service session, in particular Session Boarder Controllers.

8. A computer program product for allocating network resources for data service sessions, in particular SIP-based real-time conversational services in NGN /IMS / TISPAN systems, wherein session setup between at least two entities (7, 10; UAC, UAS) involves choosing one of a plurality of codecs (A-F) available at both entities, **characterised by** program code sequences operable to, during session initiation:
- establish a matching list (ML) of codecs available at both entities,
- reduce said list to only one item;
- set up the service session using the codec indicated by said item, and
- allocate the network resources for said service session in accordance with a resource requirement by the used codec.

9. A computer program product comprising program code sequences operable to provide the mediating network element (5) of claim 3.
